# EUROPÄISCHE PATENTSCHRIFT

(11) **EP 0 435 361 B1**
(45) Veröffentlichungstag und Bekanntmachung des Hinweises auf die Patenterteilung: **10.11.1993**
(21) Anmeldenummer: 90203176.4
(22) Anmeldetag: 03.12.1990
(51) Int. Cl.: B01D 53/34, C04B 7/60

(54) **Verfahren zur Reduzierung des Stickoxidgehalts und von Schwefelverbindungen in Abgasen**
Method of reducing nitrogen oxides and sulfur compounds in exhaust gases
Procédé pour réduire des oxydes d'azote et des composés sulfuriques dans des gaz d'échappement

(30) Priorität: 20.12.1989 DE 3942092
(43) Veröffentlichungstag der Anmeldung: 03.07.1991
(73) Patentinhaber: METALLGESELLSCHAFT Aktiengesellschaft, 60015 Frankfurt (DE)
(72) Erfinder: Eschenburg, Jochim, W-6382 Friedrichsdorf 4 (DE)

(56) Entgegenhaltungen:
- US-A- 3 929 967
- PATENT ABSTRACTS OF JAPAN, Band 3, Nr. 104 (C-57), 4. September 1979;& JP-A-54 082 365 (BABCOCK) 30-06-1979
- PATENT ABSTRACTS OF JAPAN, Band 7, Nr. 131 (C-169)[1276], 3. Juni 1983;& JP-A-58 045 723 (MITSUBISHI) 17-03-1983

## Beschreibung

Die Erfindung bezieht sich auf ein Verfahren zur Reduzierung des NOₓ-Gehaltes und von Schwefelverbindungen in den Abgasen von Zement-Brennöfen, Kraftwerkskesseln oder Müllverbrennungsanlagen durch überstöchiometrische Zugabe von Ammoniak und/oder ammoniakhaltigen Stoffen - bezogen auf den NOₓ-Gehalt - zu den heißen Abgasen, die danach, sofern Abgase von Zement-Brennöfen vorliegen unter Wärmeabgabe an das Rohmehl gekühlt und entstaubt werden und sofern Abgase von Kraftwerkskesseln oder Müllverbrennungsanlagen vorliegen unter Wärmeabgabe an die Verbrennungsluft gekühlt und bei mehr als 130°C entstaubt werden.

Sowohl die Entstickung von Abgasen durch Zugabe von Ammoniak wie auch die Entschwefelung mittels Ca-haltiger Stoffe ist bekannt (vgl. DE-A- 35 26 008). Die Reaktionsmittel werden im allgemeinen stark überstöchiometrisch zugegeben, weil sonst die Reduzierung der Schadstoffe auf die gesetzlich zugelassenen Höchstwerte nicht erreicht werden kann. Soweit die Reaktionsmittel wie bei der Entschwefelung unabhängig davon, ob sie "verbraucht" worden sind, aus dem Abgasstrom abgetrennt werden, ist die erforderliche Überdosierung primär ein wirtschaftliches Problem. Soweit die Reaktionsmittel wie bei der Entstickung selbst aber gasförmig sind, ergibt sich ein zusätzliches technisches Problem, denn das im Überschuß zugegebene Ammoniak ist selbst ein Schadstoff, dessen Emmissionswert in der Schweiz beispielsweise 30 mg/Nm³ nicht überschreiten darf.

In der US-A-39 29 967 wird ein Verfahren zur Reduzierung des NOₓ-Gehalts und zur Entschwefelung beschrieben, bei dem die Abgase mit Ammoniak in Kontakt gebracht, gekühlt und entstaubt werden. Die Entstaubung der Abgase erfolgt auf elektrostatischem Wege, wobei in vorteilhafter Weise zwei elektrostatische Abscheider eingesetzt werden.

Der Erfindung liegt die Aufgabe zugrunde, einerseits für eine wirksame Entstickung zu sorgen, andererseits aber das dazu im Überschuß zugegebene Ammoniak wieder aus den Abgasen abzutrennen bevor diese an die Umgebung abgegeben werden.

Die der Erfindung zugrundeliegende Aufgabe wird dadurch gelöst, daß die Abgase nach der Kühlung und Entstaubung bei 50 bis 100°C unter Verwendung einer Mischung aus Zement-Rohmehl und Kalkhydrat trocken oder halbtrocken entschwefelt werden und daß das in der Entschwefelungsstufe aus dem Abgas trocken abgeschiedene Feststoffgemisch in den 850 bis 1000°C heißen Abgasstrom zurückgeführt wird.

Überraschenderweise hat sich herausgestellt, daß bei einer Entschwefelung im Temperaturbereich von 50 bis 100°C mittels Zement-Rohmehl und Kalkhydrat nicht nur das SO₂ im angestrebten Umfang chemisch an Ca gebunden wird, sondern daß mit den abgeschiedenen Feststoffen auch Ammoniak weitgehend aus dem Abgas entfernt wird. Da in diesem Temperaturbereich chemische Verbindungen des Ammoniaks mit den Reaktionsmitteln der Entschwefelung nicht beständig sind, handelt es sich überwiegend um eine adsorptive Anlagerung des Ammoniaks, die allerdings bei höheren Temperaturen nicht stabil ist.

Bei der Rückführung der Reaktionsmittel aus der Entschwefelungsstufe in die heißen Abgase wird das angelagerte Ammoniak daher wieder freigesetzt und kann mit den Stickoxiden reagieren. Die Zugabe frischen Ammoniaks kann auf den echten Verbrauch beschränkt werden, während das notwendige Überschußpotential an Ammoniak erfindungsgemäß im Kreislauf geführt wird.

Vorteilhafte Ausgestaltungen des Verfahrens sind in den Unteransprüchen 2 bis 5 beschrieben.

Das erfindungsgemäße Verfahren ist mit Erfolg auch anwendbar zur Reduzierung des NOₓ-Gehalts in Abgasen aus Kraftwerkskesseln, Müllverbrennungsanlagen usw. Während aber der aus dem Abgas abgeschiedene Staub und die Rückstände der Abgasentschwefelung bei der Zementherstellung schließlich im Zement eingebunden sind und keiner Entsorgung bedürfen, fallen bei den letztgenannten Verbrennungsverfahren stets erhebliche Mengen an Reststoffen an, die einer Weiterbehandlung und/oder Endlagerung zugeführt werden müssen. Führt man bei derartigen Verfahren die der Entschwefelung vorgeschaltete Entstaubung erfindungsgemäß bei einer Temperatur von mehr als 130°C durch, dann werden nur Asche sowie Reaktionsmittel und Reaktionsprodukte der Entschwefelungsstufe abgeschieden, nicht aber NH₃, weil eine adsorptive Bindung an die Feststoffpartikel in diesem Temperaturbereich noch keine Rolle spielt und erst unterhalb von 100°C zu einer wirksamen Abscheidung von NH₃ zusammen mit den Feststoffpartikeln aus dem Abgasstrom ausgenutzt werden kann.

Die in der Entschwefelungsstufe aus dem Gasstrom abgeschiedenen Feststoffpartikel enthalten Asche, Reaktionsmittel und Reaktionsprodukte sowie adsorptiv gebundenes Ammoniak und werden erfindungsgemäß in vollem Umfang in die heißen Abgase zurückgeführt. Dabei wird das Ammoniak freigesetzt und kann mit dem NOₓ reagieren. Außerdem wird CaSO₃ zu CaSO₄ aufoxidiert und es findet mit den nicht ausgenutzten Reaktionsmitteln eine gewisse Vorentschwefelung statt. In der der Entschwefelungsstufe vorgeschalteten Entstaubungsstufe erfolgt schließlich die Ausschleusung des SO₂ aus dem Abgas-Behandlungssystem in Form von im wesentlichen CaSO₄ und geringen Anteilen an CaSO₃.

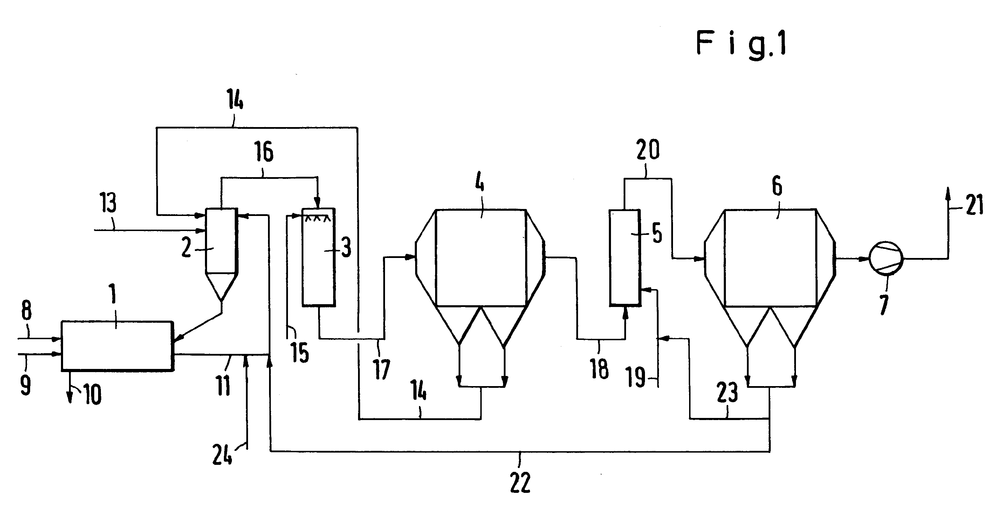

Weitere Einzelheiten werden anhand des Anlagenkonzepts gemäß Fig. 1 sowie im Rahmen des Ausführungsbeispiels näher erläutert.

Fig. 1 zeigt stark vereinfacht die Konzeption für eine Zement-Herstellungs-Anlage mit Entschwefelungs- und Entstickungseinrichtungen gemäß der Erfindung. Mit (1) ist der Zement-Brennofen bezeichnet, der über die Leitungen (8) und (9) mit Brennstoff und vorgewärmter Verbrennungsluft versorgt wird. Die Abgase verlassen den Zement-Brennofen (1) über die Leitung (11), während die fertig gebrannten Zementklinker über die Leitung (10) einer nicht dargestellten Kühlstrecke zugeführt werden, in der die Verbrennungsluft erwärmt wird.

Mit (2) ist eine Vorwärmstrecke für das Zement-Rohmehl bezeichnet, in der das über die Leitung (13) zugeführte Zement-Rohmehl - meist mehrstufig - mittels der über die Leitung (11) zugeführten Abgase des Zement-Brennofens (1) erwärmt wird. Über die Leitung (16) werden die Abgase einem Verdampfungskühler (3) zugeführt, in den zur Regelung der Abgastemperatur über die Leitung (15) eine Kühlflüssigkeit dosiert zugegeben wird. Anschließend werden die Abgase über Leitung (17) in einem elektrostatischen Staubabscheider (4) entstaubt, wobei der abgeschiedene Staub über die Leitung (14) in die Vorwärmstrecke (2) zurückgeführt wird.

Die Abgase gelangen dann über die Leitung (18) in die Entschwefelungseinrichtung, bestehend aus einem Sprühabsorber (5), Leitung (20), elektrostatischem Staubabscheider (6) und Leitung (23). Alternativ könnte hier auch eine aus Reaktor, Abscheider und Rückführleitung bestehende Einrichtung für eine zirkulierende Wirbelschicht eingesetzt werden. Über die Leitung (19) wird das erforderliche frische Reaktionsmittel zugeführt, das zur besseren Ausnutzung in der Entschwefelungseinrichtung im Kreislauf geführt wird. Mittels Gebläse (7) und Leitung (21) wird das Abgas schließlich in die Atmosphäre abgegeben.

Das im elektrostatischen Staubabscheider (6) anfallende Reaktionsprodukt wird - soweit es nicht im Kreislauf bleibt - über die Leitung (22) in die Leitung (11) eingespeist, d.h. erfindungsgemäß dem Abgasstrom dort zugesetzt, wo dieser 850 bis 1000°C aufweist. Über die Leitung (24) wird hier außerdem der Ammoniakbedarf ergänzt.

Das erfindungsgemäße Verfahren beruht auf der Feststellung, daß das im Hinblick auf eine effektive Entstickung im Überschuß angebotene Ammoniak bei der "kalten" Entschwefelung in ganz erheblichem Umfang mit den Reaktionsprodukten der Entschwefelung aus dem Abgas abgeschieden werden kann, so daß die zulässigen Abgas-Grenzwerte für Ammoniak ohne weiteres leicht unterschritten werden können. Durch die Rückführung der Reaktionsprodukte in den 850 bis 1000°C heißen Abgasstrom wird das adsorptiv gebundene Ammoniak wieder freigesetzt und steht für die Abgas-Entstickung zur Verfügung. Auf diese Weise kann die Entstickung mit einer sehr hoch überstöchiometrischen Konzentration durchgeführt werden, ohne daß im gereinigten Abgas unzulässig hohe Ammoniak-Konzentrationen auftreten. So wie die Reaktionsmittel für die Entschwefelung über die Leitung (23), den Sprühabsorber (5), die Leitung (20) und den elektrostatischen Staubabscheider (6) im Kreislauf gefahren werden, wird über die Leitung (20) und die Apparate (2) bis (6) ein Kreislauf mit hohem Ammoniaküberschuß aufrechterhalten und dadurch eine wirksame Entstickung erreicht.

Bei der versuchsweisen Anwendung des erfindungsgemäßen Verfahrens wurde eine Abgasmenge von 220 000 Nm³/h entstickt und bei 63°C entschwefelt. In diesem Fall wurde eine aus Reaktor, Abscheider und Rückführleitung bestehende Einrichtung zur Erzeugung einer zirkulierenden Wirbelschicht und ein Reaktionsmittel aus ca. 65 % Zement-Rohmehl und ca. 35 % Kalkhydrat benutzt. Das Rohmehl hatte einen SO₂ -Gehalt von 2,8 g/Nm³ und einen Ammoniakgehalt von 80 mg/Nm³. Die Fahrweise der Entschwefelungseinrichtung war so eingestellt, daß im Reingas nur noch weniger als 500 mg SO₂ pro Nm³ vorhanden waren. Gleichzeitig wurde der Ammoniakgehalt von 80 auf weniger als 4 mg/Nm³ gesenkt. Das entspricht einer Ammoniakabscheidung von mehr als 95 %.

Der Bedarf an frischem Reaktionsmittel betrug 110 g/Nm³, der an frischem Ammoniak 0,04 g/Nm³. In dem in Gasströmungsrichtung ersten Staubabscheider fiel eine Feststoffmenge von etwa 2150 kg/h an, die in die Vorwärmstrecke für das Rohmehl zurückgeführt wurde. Eine etwa gleich große NH₃-haltige Feststoffmenge fiel im zweiten Staubabscheider an und wurde in die heißen Abgase zurückgeführt.

## Patentansprüche

1. Verfahren zur Reduzierung des NOₓ-Gehaltes und von Schwefelverbindungen in den Abgasen (11) von Zement-Brennöfen (1), Kraftwerkskesseln oder Müllverbrennungsanlagen durch überstöchiometrische Zugabe von Ammoniak (24) und/oder ammoniakhaltigen Stoffen - bezogen auf den NOₓ-Gehalt - zu den heißen Abgasen (11), die danach, sofern Abgase (11) von Zement-Brennöfen vorliegen unter Wärmeabgabe an das Rohmehl (13) gekühlt und entstaubt werden und sofern Abgase (11) von Kraftwerkskesseln oder Müllverbrennungsanlagen vorliegen unter Wärmeabgabe an die Verbrennungsluft gekühlt, und bei mehr als 130°C entstaubt werden, dadurch gekennzeichnet, daß die Abgase anschließend bei 50 bis 100°C unter Verwendung einer Mischung aus Zement-Rohmehl und Kalkhydrat trocken oder halbtrocken entschwefelt werden und daß das in der Entschwefelungsstufe (5, 20, 6, 23) aus dem Abgas (11) trocken abgeschiedene Feststoffgemisch in den 850 bis 1000°C heißen Abgasstrom (11) zurückgeführt wird.

2. Verfahren nach Anspruch 1, dadurch gekennzeichnet, daß die Zugabe von Ammoniak (24) bzw. von ammoniakhaltigen Stoffen ebenfalls bei 850 bis 1000°C erfolgt.

3. Verfahren nach Anspruch 2, dadurch gekennzeichnet, daß die Reduzierung des NOₓ-Gehalts mit einem Verhältnis NH₃ zu NOₓ von 1 bis 2 durchgeführt wird.

4. Verfahren nach Anspruch 3, dadurch gekennzeichnet, daß die Entschefelung mit einer Mischung aus 30 bis 75 % Zement-Rohmehl und 25 bis 70 % Kalkhydrat durchgeführt wird.

5. Verfahren nach Anspruch 4, dadurch gekennzeichnet, daß die Entschwefelung mit einem Verhältnis CaO zu SO₂ von 1 bis 3 durchgeführt wird.

## Claims

1. A method for reducing the content of NOₓ and sulphur compounds in the exhaust gases (11) of cement kilns (1), power station boilers or refuse incineration plants by the super-stoichiometric addition of ammonia (24) and/or ammonia-containing substances - relative to the NOₓ content - to the hot exhaust gases (11), which then, if exhaust gases (11) of cement kilns are present, are cooled with the emission of heat to the raw meal (13) and undergo dust removal, and, if exhaust gases (11) of power station boilers or refuse incineration plants are present, are cooled with the emission of heat to the combustion air and undergo dust removal at more than 130°C, characterised in that the exhaust gases are then desulphurised in the dry state or semi-dry state at 50 to 100°C using a mixture of cement raw meal and hydrated lime and that the solids mixture which was separated out from the exhaust gas (11) in the dry state in the desulphurisation stage (5, 20, 6, 23) is recycled into the stream of exhaust gas (11) which is at a temperature of 850 to 1000°C.

2. A method according to Claim 1, characterised in that the addition of ammonia (24) or of ammonia-containing substances likewise takes place at 850 to 1000°C.

3. A method according to Claim 2, characterised in that the reduction of the NOₓ content is carried out with a ratio of NH₃ to NOₓ of 1 to 2.

4. A method according to Claim 3, characterised in that the desulphurisation is carried out with a mixture of 30 to 75% cement raw meal and 25 to 70% hydrated lime.

5. A method according to Claim 4, characterised in that the desulphurisation is carried out with a ratio of CaO to SO₂ of 1 to 3.

## Revendications

1. Procédé de diminution de la teneur en NOₓ et en composés soufrés des effluents gazeux (11) de fours de combustion (1) du ciment, de chaudières de centrales électriques ou d'installations d'incinération de déchets, par addition hyperstoechiomérique d'ammoniac (24) et/ou de substances en contenant - rapportées à la teneur en NOₓ - aux effluents gazeux (11) chauds, lesquels sont ensuite, dans la mesure où ils proviennent de fours de combustion du ciment refroidi et dépoussiérés en cédant de la chaleur à la farine crue (13) et dans la mesure où ils proviennent de chaudières de centrales électriques ou d'installations d'incinération d'ordures, refroidis et dépoussiérés à plus de 130°C en cédant de la chaleur à l'air de combustion, caractérisé en en qu'ensuite, les effluents gazeux sont désulfurés à sec ou à l'état semi-sec entre 50 et 100°C en utilisant un mélange de farine crue de ciment et d'hydrate de chaux et en ce que le mélange de matière solide séparé à sec de l'effluent gazeux (11) dans le stade de désulfuration (5, 20, 6, 23) est retourné au courant d'effluents gazeux (11) chauds à une température de 850 à 1000°C.

2. Procédé suivant la revendication 1, caractérisé en ce qu'il consiste à effectuer l'addition d'ammoniac (24) ou de substances en contenant également entre 850 et 1000°C.

3. Procédé suivant la revendication 2, caractérisé en ce qu'il consiste à effectuer l'opération de diminution de la tenuer en NOₓ avec un rapport de NH₃ à NOₓ de 1 à 2.

4. Procédé suivant la revendication 3, caractérisé en ce qu'il consiste à effectuer la désulfuration par un mélange constitué de 30 à 75 % de farine crue de ciment et de 25 à 70 % d'hydrate de chaux.

5. Procédé suivant la revendication 4, caractérisé en ce qu'il consiste à effectuer la désulfuration avec un rapport de CaO à SO₂ de 1 à 3.
